# EUROPÄISCHE PATENTSCHRIFT

(11) **EP 1 509 702 B1**
(45) Veröffentlichungstag und Bekanntmachung des Hinweises auf die Patenterteilung: **26.05.2010**
(21) Anmeldenummer: 03740484.5
(22) Anmeldetag: 20.05.2003
(51) Int. Cl.: F04D 29/58, F02C 7/143, F02C 6/16

(54) **VERFAHREN ZUM BETREIBEN EINES VERDICHTERS**
METHOD FOR OPERATING A COMPRESSOR
PROCEDE POUR FAIRE FONCTIONNER UN COMPRESSEUR

(30) Priorität: 04.06.2002 CH 939022002
(43) Veröffentlichungstag der Anmeldung: 02.03.2005
(73) Patentinhaber: Alstom Technology Ltd, 5400 Baden (CH)
(72) Erfinder: DÖBBELING, Klaus, CH-5210 Windisch (CH); JIMENEZ, HÄRTEL, Carlos, D-81247 München (DE)
(86) Internationale Anmeldenummer: PCT/EP2003/050180
(87) Internationale Veröffentlichungsnummer: WO 2003/102424

(56) Entgegenhaltungen:
- EP-A- 0 524 435
- EP-A- 0 561 011
- EP-A- 0 903 483
- DE-A- 2 352 561
- DE-A- 19 732 268
- DE-A- 19 913 681
- GB-A- 1 028 254
- US-A- 2 840 182
- US-A- 4 417 847
- US-A- 5 622 044

## Beschreibung

### TECHNISCHES GEBIET

Die vorliegende Erfindung betrifft ein Verfahren zum Betreiben eines Verdichters gemäss dem Oberbegriff des Anspruchs 1.

### STAND DER TECHNIK

Es sind aus dem Stand der Technik zwei unterschiedliche Verfahren zur Leistungssteigerung von Gasturbinen bekannt, die auf einer Kühlung des Luftmassenstroms beruhen. Eine Kühlung des Luftmassenstroms, der von der Gasturbine aufgenommen wird, führt zu einer erhöhten Leistungsabgabe der Maschine. Die Gründe hierfür sind zum einen der durch die Kühlung erhöhte Massenstrom an Luft, sowie die Verringerung der Leistungsaufnahme eines Kompressors bei geringeren Eintrittstemperaturen. Grundsätzlich sind zwei Arten der Kühlung bekannt: eine Kühlung der Eintrittsluft, welche in den Verdichter strömt, und eine Zwischenkühlung zwischen zwei getrennten Verdichterstufen.

Zur Eintrittskühlung werden unterschiedliche Techniken eingesetzt, u.a. sind dabei Verfahren bekannt, die mit einer Wassereinspritzung arbeiten. Bei Einspritzung von wenig Wasser (typischerweise <1% des Luftmassenstroms), das vollständig verdampft, wird die Kühlung durch Aufnahme von Verdampfungswärme erreicht. Andererseits ist auch eine Kühlung durch die Aufnahme fühlbarer Wärme im direkten Kontakt von Luft und Wasser möglich. Dies ist in der Offenlegungsschrift DE-A1-199 13 681 vorgeschlagen worden , welche den nachstkommenden Stand der Technik repräsentiert. Um eine merkliche Kühlung zu erreichen, sind hierbei relativ grosse Wassermengen erforderlich, sowie eine grosse Kontaktfläche zwischen flüssiger Phase und zu kühlender Luft. Dies kann am besten durch eine Zerstäubung des Wassers in feine Tropfen erreicht werden. In DE-A1-199 13 681 wird dafür beispielhaft ein Rieselkühler vorgeschlagen. Zu bemerken ist noch, dass auch in dieser Art der Kühlung eine zusätzliche Kühlung durch teilweise Verdampfung des Wasser auftreten kann. Ob Verdampfung auftritt, ist abhängig von der erreichten Endtemperatur. Liegt diese hinreichend tief, geht kein weiteres Wasser in die dampfförmige Phase über. Es ist dann sogar möglich, Wasser aus der angesaugten Luft auszukondensieren.

Der Einsatz von Wasser zur Eintrittskühlung beschränkt die Anwendbarkeit der Methode auf hinreichend warme Umgebungstemperaturen, bei denen keine Gefahr der Vereisung besteht (ca. >10°C). In entsprechenden Wärmetauschern mit indirekter Kühlung (Wasser und Luft kommen nicht in direkten Kontakt) hat man grundsätzlich die Möglichkeit, der Eisbildung durch die Zugabe von Frostschutzmitteln zu begegnen; diese Möglichkeit besteht bei einer direkten Einspritzung des Wassers in den Luftstrom nicht.

Eine Zwischenkühlung der Luft während der Kompression, wie sie aus DE-A1-42 37 665 bekannt ist, verringert die Leistungsaufnahme eines Turboverdichters in Folge Verringerung der Kompressionsarbeit. Im Gegensatz zur Eintrittskühlung wird hierbei aber keine Vergrösserung des Luftmassenstroms erzielt. In den meisten Fällen werden für die Zwischenkühlung klassische Wärmetauscher eingesetzt. In letzter Zeit gibt es aber verstärkt Bemühungen, die gewünschte Kühlung durch Einspritzen von Wasser zu erreichen. Dies ist beispielhaft aus EP-A1-0 770 771 bekannt. Hierbei wird bisher ausschliesslich das Konzept einer Kühlung durch Verdampfung verfolgt, bei der dem Luftstrom fein atomisiertes, demineralisiertes Wasser zugegeben wird. Dies geschieht entweder im Innern des Kompressors zwischen einzelnen Verdichterstufen (sogenanntes "spray intercooling"), oder bereits stromauf des Kompressors im Lufteinlass. Die zugegebene Menge Wasser ist in diesen Anwendungen normalerweise klein, sie liegt zwischen 0.5% und 1.5% des Massenstroms an Luft. Die Kühlung der Luft geschieht dabei nahezu ausschliesslich durch Aufnahme von Verdampfungswärme durch das Wasser, der Austausch von fühlbarer Wärme zwischen Gas und flüssigem Wasser spielt dagegen praktisch keine Rolle.

Ein erheblicher Nachteil der Zwischenkühlung durch Verdampfung ist der Wasserverlust. Das eingespritzte flüssige Wasser lässt sich in den meisten Fällen aus dem Abgas nicht mehr wirtschaftlich zurückgewinnen und wird an die Atmosphäre abgegeben. Vor allem in Regionen mit Wassermangel kann dies ein erhebliches Problem darstellen. Bei dieser Art der Zwischenkühlung ergeben sich zudem noch technische Probleme durch die Anwesenheit von flüssigem Wasser in der Verdichterbeschaufelung. Dies kann zu Erosion und Korrosion führen, sowie die aerodynamischen Eigenschaften der Schaufeln verändern.

### DARSTELLUNG DER ERFINDUNG

Der Erfindung liegt demnach die Aufgabe zugrunde, ein Verfahren zum Betrieben eines Verdichters anzugeben, mit welchem auf einfache Weise der Wirkungsgrad erhöht werden kann, wobei die aus dem Stand der Technik bekannten Nachteile vermieden werden.

Erfindungsgemäss wird die Aufgabe durch ein Verfahren gemäss dem Oberbegriff des Anspruchs 1 dadurch gelöst, dass im Zwischenkühler ein flüssiges Medium in das gasförmige Medium eingespritzt wird, so dass sich im Zwischenkühler eine Zweiphasenströmung mit einer flüssigen und einer gasförmigen Phase bildet, wobei das gasförmige Medium durch eine Wärmeübertragung von dem gasförmigen Medium auf das flüssige Medium gekühlt wird, und dass vor dem Eintritt in die nachfolgende Verdichterstufe die flüssige Phase abgeschieden wird.

Die Kühlung durch eine Einspritzung von Wasser wird nicht oder nicht ausschliesslich durch Aufnahme von Verdampfungsenergie bewirkt, sondern die Aufnahme von fühlbarer Wärme, d.h. eine Temperaturerhöhung des flüssigen Mediums, leistet einen wesentlichen Beitrag.

Um den gewünschten Wärmeübergang durch den direkten Kontakt von der flüssigen und der gasförmigen Phase im Zwischenkühler zu erreichen, ist eine Atomisierung des Wassers in möglichst feine Tropfen während der Einspritzung erforderlich. So kann das flüssige Medium beim Einspritzen in den Zwischenkühler beispielsweise in Tropfen mit einer Tropfengrösse von kleiner 100 µm zerstäubt werden.

Vorteilhaft kann die aus dem Zwischenkühler abgeschiedene flüssige Phase wieder verwendet werden, indem sie in einem Kühler rückgekühlt und dann erneut in den Zwischenkühler eingespritzt wird.

Zudem ist es für die Erfindung von Vorteil, wenn die dargestellte Zwischenkühlung durch Wassereinspritzung nach dem Niederdruckteil des Verdichters bei einem Druckniveau unterhalb von 3bar stattfindet. Dieses ist wichtig, um trotz der Wärmeabgabe nach aussen grössere Wirkungsgradverluste der Gesamtanlage zu vermeiden. Um eine ausreichende Kühlung sicherzustellen, sollte dabei vorteilhaft das flüssige Medium in dem Zwischenkühler mit einer Temperatur von unter 5° C eingespritzt werden.

In einem Ausführungsbeispiel der Erfindung handelt es sich bei dem gasförmigen Medium um Luft, welche in dem Verdichter verdichtet wird, und bei dem eingespritzten, flüssigen Medium um Wasser, welches in dem Zwischenkühler eingespritzt wird.

### KURZE ERLÄUTERUNG DER ZEICHNUNG

Die Erfindung wird anhand der beigefügten Figuren illustriert, wobei
- **Fig.1**: ein Ausführungsbeispiel eines Verdichters mit einem erfindungsgemässen Zwischenkühler und
- **Fig. 2-4**: die zeitliche Entwicklung von Tropfentemperatur T_{W}, Lufttemperatur T_{L} und Dampfgehalt F in einem Wasser-Luft-Gemisch bei verschiedenen Tropfendurchmessern von 10, 30 und 100 µm zeigt.

Es werden nur die für die Erfindung wesentlichen Elemente dargestellt. Gleiche Elemente werden in verschiedenen Figuren gleich bezeichnet.

### WEGE ZUR AUSFÜHRUNG DER ERFINDUNG

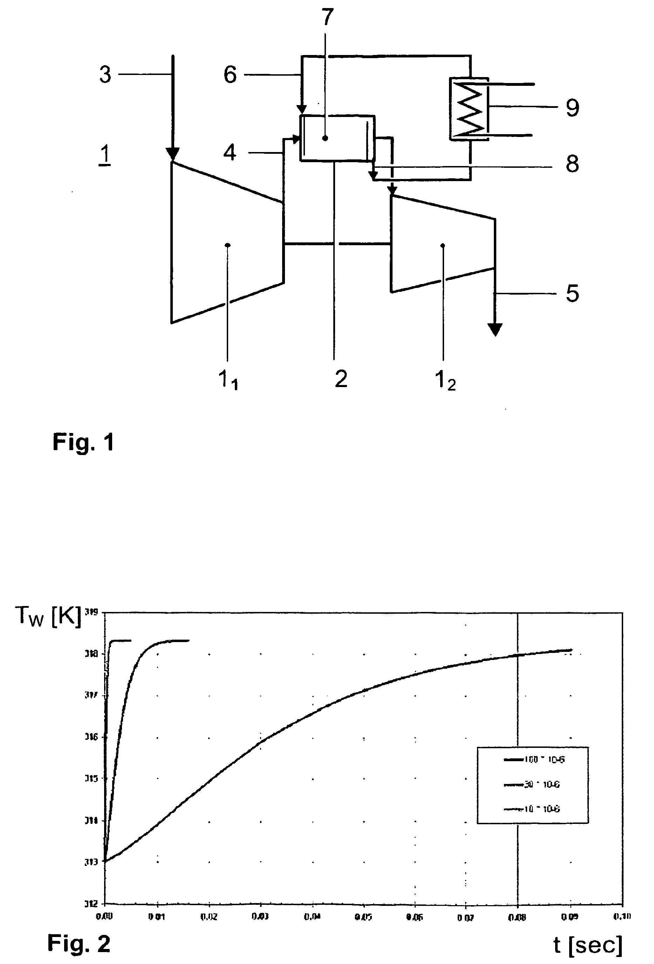

Wie aus der Figur 1 hervorgeht, bezieht sich die Erfindung auf einen Verdichter 1 mit einem Zwischenkühler 2, welcher zwischen zwei Verdichterstufen 1₁. 1₂ angeordnet ist. Eintrittsluft 3 strömt in die erste Verdichterstufe 1₁, welche den Niederdruckteil des Verdichters 1 darstellt. Die aus der Verdichterstufe 1₁ abgeleitete teilverdichtete Luft 4 wird in dem Zwischenkühler 2 gekühlt, bevor sie weiter in der zweiten Verdichterstufe 1₂ zu einem bestimmten Enddruck verdichtet wird. Die endverdichtete Luft 5 wird dann beispielsweise in die nicht dargestellte Brennkammer einer Gasturbine eingeleitet oder zu einem anderen, geeigneten Zweck verwendet.

Erfindungsgemäss wird die Zwischenkühlung im Zwischenkühler 2 durch eine Einspritzung von Wasser 6 durchgeführt, so dass die Kühlung nicht oder nicht ausschliesslich durch Aufnahme von Verdampfungsenergie bewirkt wird, sondern die Aufnahme von fühlbarer Wärme einen wesentlichen Beitrag leistet. Die Zugabe von Wasser 6 findet dabei in einem geeigneten Einbau nach der ersten Verdichterstufe 1₁, also nach dem Niederdruckteil des Verdichters, statt. Im Zwischenkühler entsteht so eine Zweiphasenströmung 7 mit einer Gas- und einer Flüssigkeitsphase. Vor dem Eintritt in die nächste, stromabliegende Verdichterstufe 1₂ wird die flüssige Phase abgeschieden, während die Gasphase darin weiter verdichtet wird. Dies kann durch einen Tropfenabscheider geschehen. Das abgeschiedene Wasser 8 wird im Kühler 9 rückgekühlt und dann erneut in den Zwischenkühler 2 eingespritzt. Als Kühler 9 ist eine Kältemaschine oder eine andere, geeignete Wärmesenke (z.B. Verdampfung von verflüssigtem Erdgas) denkbar. Es ist auch denkbar, diese Art der Kühlung mit Wassereinspritzung und -abscheidung mehrfach während des Verdichterprozesses einzusetzen.

Selbstverständlich ist der Erfindung nicht auf Luft und Wasser beschränkt, sondern bezieht sich allgemein auf die Verdichtung eines gasförmigen Mediums mit einer Einspritzung eines flüssigen Mediums.

Durch dieses Vorgehen werden die technischen Schwierigkeiten einer 2-Phasen-Kompression im Verdichter 1 vermieden. Durch die am Einspritzort herrschenden höheren Temperaturen nach der Teilverdichtung wird die im Stand der Technik genannte Einschränkung bei der Eintrittskühlung auf günstige klimatische Bedingungen vermieden. Zudem ist es für die Erfindung von Vorteil, wenn die dargestellte Zwischenkühlung durch Wassereinspritzung nach dem Niederdruckteil des Verdichters 1 bei einem Druckniveau unterhalb von 3bar stattfindet. Dieses ist wichtig, um trotz der Wärmeabgabe nach aussen grössere Wirkungsgradverluste der Gesamtanlage zu vermeiden. Hierzu ist es sinnvoll, die Energieabgabe auf einem Temperaturniveau vorzunehmen, das unter der Temperatur des Abgases der gesamten Anlage liegt. In einem Kombikraftwerk liegt die Temperatur des Abgases typischerweise um 90°C. Um eine ausreichende Kühlung sicherzustellen, sollte dabei vorteilhaft das flüssige Medium in dem Zwischenkühler mit einer Temperatur von unter 5° C eingespritzt werden.

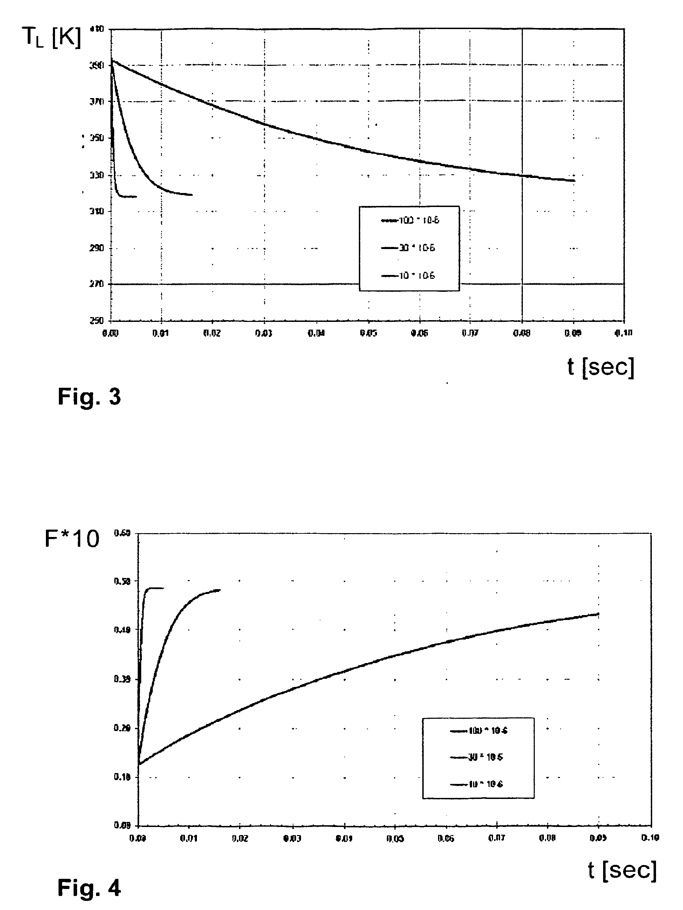

Der gewünschte Wärmeübergang im Zwischenkühler 2 im direkten Kontakt von Wasser und Luft setzt eine ausreichend grosse Kontaktfläche zwischen den beiden Phasen innerhalb der Zweiphasenströmung 7 voraus. Dies erfordert eine Atomisierung des Wassers in möglichst feine Tropfen während der Einspritzung. Einen Eindruck vom Einfluss der Tropfengrösse auf die Zustandsänderungen der flüssigen und gasförmigen Phase geben die Kurven in den Fig. 2 bis 4. Gezeigt sind dort die zeitlichen Änderungen von Wassertemperatur T_{W} (Fig. 2), Lufttemperatur T_{L} (Fig. 3) und Dampfgehalt F (Fig. 4) in einem Luft-Wasser-Gemisch, bei dem die Anfangstemperatur des Wassers T_{W}=40°C beträgt, die Anfangstemperatur der Luft T_{L}=120°C und der Systemdruck p=2.5bar. Dargestellt sind Ergebnisse für drei verschiedene Tropfengrössen d von 10µm, 30µm und 100µm. Das Massenverhältnis von Luft zu Wasser ist auf 1 gesetzt, der Dampfgehalt F der Luft zu Beginn entspricht einer relativen Feuchte von ca. 50% bei Umgebungsdruck und Umgebungstemperatur. Berechnet wurden die Kurven durch numerische Lösung der Grundgleichungen für den Wärme- und Stoffübergang in einer 2-Phasen Strömung. Wie die Kurvenverläufe zeigen, liegt der Gleichgewichtspunkt des Gemisches bei etwa 45°C, wobei der Dampfgehalt F bis dahin etwa um etwa einen Faktor 4 zunimmt. Die Schnelligkeit, mit der die M-schung dem Gleichgewichtszustand zustrebt, hängt stark von der Tropfengrösse ab: Für Tropfen mit einem Durchmesser von d=10µm wird das Gleichgewicht ca. 100mal schneller erreicht als für Tropfen von d=100µm. Grundsätzlich gilt, dass die Tropfengrösse klein genug sein muss, um einen guten Wärmetausch zu bekommen, aber gross genug, um die Tropfen leicht wieder abscheiden zu können. Im vorliegenden Beispiel geschieht die Kühlung sowohl durch Verdampfung als auch durch die Aufnahme fühlbarer Wärme, wobei letztere etwa 25% der gesamten Kühlleistung ausmacht. Durch Erhöhung der zugegebenen Wassermenge kann dieser Anteil aber deutlich gesteigert werden. Im Grenzfall sehr grosser Wassermengen und/oder ausreichend geringer Wassertemperaturen am Eintritt, kann die Verdampfung von Wasser ganz unterbunden werden.

Um eine Abschätzung für die Baugrösse des Zwischenkühlers 2 zu erhalten, muss die Zeit, die näherungsweise zum Erreichen des Gleichgewichts erforderlich ist, mit der geplanten Durchflussgeschwindigkeit im Wärmetauscher multipliziert werden. Bei sehr kleinen Tropfen von d=10µm errechnet man im vorliegenden Fall für eine angenommene Luftgeschwindigkeit von U=150m/s im Verdichter 1 eine Baulänge von nur 0.5m. Dies würde eine kompakte Integration des Wärmetauschers in den Verdichter 1 erlauben. Für grosse Tropfen von d=100µm scheint dagegen ein deutlich grösserer Wärmetauscher mit einer Baulänge von 3-4m und einer auf ca. U=20-30m/s verringerten Strömungsgeschwindigkeit erforderlich zu sein. Es muss hier allerdings darauf hingewiesen werden, dass die untenstehenden Ergebnisse für den Fall gelten, dass es zwischen Tropfen und Luft zu keiner Relativbewegung kommt. In der Praxis dürften dagegen die Geschwindigkeiten von Luft und Wassertropfen voneinander abweichen, was zu einem erhöhten Austausch von Wärme und einer schnelleren Verdampfung führt. Dies verringert die erforderliche Baulänge eines Wärmetauschers (bzw. erlaubt grössere Strömungsgeschwindigkeiten bei gegebener Baulänge).

### BEZUGSZEICHENLISTE

- 1: Verdichter
- 1₁,1₂: Verdichterstufen
- 2: Zwischenkühler
- 3: gasförmiges Medium, Eintrittsluft
- 4: Teilverdichtete Luft
- 5: Endverdichtete Luft
- 6: Flüssiges Medium, Wasser
- 7: Zweiphasenströmung
- 8: Abgeschiedenes Wasser
- 9: Kühler

- d: Tropfendurchmesser
- T_{W}: Temperatur der flüssigen Phase im Zwischenkühler 2
- T_{L}: Temperatur der gasförmigen Phase im Zwischenkühler 2
- p: Druck
- t: Zeit
- U: Geschwindigkeit der Zweiphasenströmung 7
- F: Dampfgehalt

## Patentansprüche

1. Verfahren zum Betreiben eines Verdichters (1), wobei ein Zwischenkühler (2) zwischen zwei Stufen des Verdichters (1₁, 1₂) angeordnet ist, wobei ein gasförmiges Medium (3) in der ersten Verdichterstufe (1₁) verdichtet wird und das teilverdichtete Medium (4) aus der ersten Verdichterstufe (1₁) in dem Zwischenkühler (2) geleitet und dort gekühlt wird, bevor es in eine nachfolgende Verdichterstufe (1₂) geleitet und dort weiter verdichtet wird,
**dadurch gekennzeichnet, dass**
im Zwischenkühler (2) ein flüssiges Medium (6) in das gasförmige Medium (4) eingespritzt wird, so dass sich im Zwischenkühler (2) im Gleichstrom eine Zweiphasenströmung (7) mit einer flüssigen und einer gasförmigen Phase bildet, wobei das gasförmige Medium (4) durch eine Wärmeübertragung von dem gasförmigen Medium (4) auf das flüssige Medium (6) gekühlt wird, und dass vor dem Eintritt in die nachfolgende Verdichterstufe (1₂) die flüssige Phase abgeschieden wird.

2. Verfahren nach Anspruch 1,
**dadurch gekennzeichnet, dass**
das gasförmige Medium (4) durch Temperaturerhöhung des flüssigen Mediums (6) gekühlt wird.

3. Verfahren nach Anspruch 2,
**dadurch gekennzeichnet, dass**
das gasförmige Medium (4) zusätzlich durch Verdampfung des flüssigen Mediums (6) gekühlt wird.

4. Verfahren nach einem der Ansprüche 1 bis 3,
**dadurch gekennzeichnet, dass**
das flüssige Medium (6) beim Einspritzen in den Zwischenkühler (2) in Tropfen zerstäubt wird.

5. Verfahren nach Anspruch 4,
**dadurch gekennzeichnet, dass**
das flüssige Medium (6) beim Einspritzen in den Zwischenkühler (2) in Tropfen mit einer Tropfengrösse von kleiner 100 µm zerstäubt wird.

6. Verfahren nach Anspruch 4,
**dadurch gekennzeichnet, dass** die Tropfen durch einen Tropfenabscheider abgeschieden werden.

7. Verfahren nach einem der Ansprüche 1 bis 5,
**dadurch gekennzeichnet, dass**
die aus dem Zwischenkühler (2) abgeschiedene flüssige Phase gekühlt und dann erneut in den Zwischenkühler (2) eingespritzt wird.

8. Verfahren nach einem der Ansprüche 1 bis 5,
**dadurch gekennzeichnet, dass**
während der Verdichtung das gasförmige Medium (4) mehrfach durch Einspritzen und Abscheiden eines flüssigen Mediums (6) zwischengekühlt wird.

9. Verfahren nach einem der Ansprüche 1 bis 5,
**dadurch gekennzeichnet, dass**
das gasförmige Medium (3) in der ersten Verdichterstufe von Umgebungsdruck auf einen Druck von unter 3bar verdichtet wird, bevor es in den Zwischenkühler (2) geleitet und dort das flüssige Medium (3) eingespritzt wird.

10. Verfahren nach Anspruch 9,
**dadurch gekennzeichnet, dass**
das flüssige Medium (6) in dem Zwischenkühler (2) mit einer Temperatur von unter 5°C eingespritzt wird.

11. Verfahren nach einem der vorrangegangen Ansprüche,
**dadurch gekennzeichnet, dass**
Luft (3) in dem Verdichter (1, 1₁, 1₂) verdichtet und Wasser (6) in dem Zwischenkühler (2) eingespritzt wird.

## Claims

1. Method for operating a compressor (1), an intermediate cooler (2) being arranged between two stages of the compressor (1₁, 1₂), a gaseous medium (3) being compressed in the first compressor stage (1₁), and the partially compressed medium (4) being conducted out of the first compressor stage (1₁) into the intermediate cooler (2) and being cooled there before it is conducted into a following compressor stage (1₂) and is further compressed there, **characterized in that** a liquid medium (6) is injected into the gaseous medium (4) in the intermediate cooler (2), so that a two-phase flow (7) with a liquid phase and with a gaseous phase is formed in co-current in the intermediate cooler (2), the gaseous medium (4) being cooled by a transfer of heat from the gaseous medium (4) to the liquid medium (6), and **in that**, before entry into the following compressor stage (1₂), the liquid phase is separated.

2. Method according to Claim 1, **characterized in that** the gaseous medium (4) is cooled by means of a rise in temperature of the liquid medium (6).

3. Method according to Claim 2, **characterized in that** the gaseous medium (4) is additionally cooled by means of the evaporation of the liquid medium (6).

4. Method according to one of Claims 1 to 3, **characterized in that** the liquid medium (6), when being injected into the intermediate cooler (2), is atomized into drops.

5. Method according to Claim 4, **characterized in that** the liquid medium (6), when being injected into the intermediate cooler (2), is atomized into drops with a drop size of less than 100 µm.

6. Method according to Claim 4, **characterized in that** the drops are separated by means of a drop separator.

7. Method according to one of Claims 1 to 5, **characterized in that** the liquid phase separated from the intermediate cooler (2) is cooled and is then injected anew into the intermediate cooler (2).

8. Method according to one of Claims 1 to 5, **characterized in that**, during compression, the gaseous medium (4) is intermediately cooled multiply by means of the injection and separation of a liquid medium (6).

9. Method according to one of Claims 1 to 5, **characterized in that**, in the first compressor stage, the gaseous medium (3) is compressed from ambient pressure to a pressure of below 3 bar before it is conducted into the intermediate cooler (2) and the liquid medium (3) is injected there.

10. Method according to Claim 9, **characterized in that** the liquid medium (6) is injected into the intermediate cooler (2) at a temperature of below 5°C.

11. Method according to one of the preceding claims, **characterized in that** air (3) is compressed in the compressor (1, 1₁ 1₂) and water (6) is injected into the intermediate cooler (2).

## Revendications

1. Procédé pour faire fonctionner un compresseur (1), dans lequel un refroidisseur intermédiaire (2) est disposé entre deux étages du compresseur (1₁, 1₂), dans lequel on comprime un fluide gazeux (3) dans un premier étage de compresseur (1₁) et on conduit le fluide partiellement comprimé (4) provenant du premier étage de compresseur (1₁) dans le refroidisseur intermédiaire (2) et on l'y refroidit, avant de le conduire dans un étage de compresseur qui suit (1₂) et de l'y comprimer de nouveau, **caractérisé en ce que** l'on injecte un fluide liquide (6) dans le fluide gazeux (4) dans le refroidisseur intermédiaire (2), de telle manière qu'il se forme dans le refroidisseur intermédiaire (2), en courant parallèle, un écoulement à deux phases (7) avec une phase liquide et une phase gazeuse, dans lequel on refroidit le fluide gazeux (4) par transfert de chaleur du fluide gazeux (4) au fluide liquide (6), et **en ce que** l'on sépare la phase liquide avant l'entrée dans l'étage de compresseur qui suit (1₂).

2. Procédé selon la revendication 1, **caractérisé en ce que** l'on refroidit le fluide gazeux (4) par augmentation de la température du fluide liquide (6).

3. Procédé selon la revendication 2, **caractérisé en ce que** l'on refroidit en plus le fluide gazeux (4) par évaporation du fluide liquide (6).

4. Procédé selon l'une quelconque des revendications 1 à 3, **caractérisé en ce que** l'on pulvérise le fluide liquide (6) en gouttes lors de l'injection dans le refroidisseur intermédiaire (2).

5. Procédé selon la revendication 4, **caractérisé en ce que** l'on pulvérise le fluide liquide (6) en gouttes avec une taille de goutte inférieure à 100 µm lors de l'injection dans le refroidisseur intermédiaire (2).

6. Procédé selon la revendication 4, **caractérisé en ce que** l'on sépare les gouttes au moyen d'un séparateur de gouttes.

7. Procédé selon l'une quelconque des revendications 1 à 5, **caractérisé en ce que** l'on refroidit la phase liquide séparée provenant du refroidisseur intermédiaire (2) et on l'injecte ensuite de nouveau dans le refroidisseur intermédiaire (2).

8. Procédé selon l'une quelconque des revendications 1 à 5, **caractérisé en ce que** l'on refroidit le fluide gazeux (4) à plusieurs reprises à des niveaux intermédiaires par injection et séparation d'un fluide liquide (6) pendant la compression.

9. Procédé selon l'une quelconque des revendications 1 à 5, **caractérisé en ce que** l'on comprime le fluide gazeux (3) de la pression atmosphérique à une pression de moins de 3 bar dans le premier étage de compresseur avant de le conduire dans le refroidisseur intermédiaire (2) et d'y injecter le fluide liquide (3).

10. Procédé selon la revendication 9, **caractérisé en ce que** l'on injecte le fluide liquide (6) dans le refroidisseur intermédiaire (2) à une température de moins de 5°C.

11. Procédé selon l'une quelconque des revendications précédentes, **caractérisé en ce que** l'on comprime de l'air (3) dans le compresseur (1, 1₁, 1₂) et on injecte de l'eau (6) dans le refroidisseur intermédiaire (2).
